(19) Europäisches Patentamt
European Patent Office
Office européen des brevets

(11) EP 1 257 077 A1

(12) **EUROPEAN PATENT APPLICATION**
published in accordance with Art. 158(3) EPC

(43) Date of publication:
**13.11.2002 Bulletin 2002/46**

(21) Application number: **00907408.9**

(22) Date of filing: **17.02.2000**

(51) Int Cl.[7]: **H04J 13/02**

(86) International application number:
**PCT/CN00/00028**

(87) International publication number:
**WO 01/061902 (23.08.2001 Gazette 2001/34)**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Linkair Communications, Inc.**
**Santa Clara, CA 95054 (US)**

(72) Inventor: **LI, Daoben**
**Beijing 100044 (CN)**

(74) Representative: **Ganahl, Bernhard**
**Reinhardt-Söllner-Ganahl,**
**P.O. Box 12 26**
**85542 Kirchheim b. München (DE)**

# (54) A METHOD FOR SPREAD SPECTRUM MULTIPLE ACCESS CODING WITH ZERO CORRELATION WINDOW

(57) This invention discloses a coding method of spreading spectrum multiple access codes in the area of any wireless communications system that involves CDMA and spreading spectrum technology. It uses two orthogonal, synchronous fading channels to transmit two pairs of multiple access spreading codes respectively. These two pairs of spreading codes oppose each other but also complement each other in the transmission so that their correlation has a property of zero correlation window, i.e. the auto-correlation and cross-correlation functions have no side lobes within the zero correlation window. That means that ISI and MAI will be completely eliminated in the corresponding CDMA and spreading spectrum system, so that makes it possible to build a wireless digital communications system of large RF capacity and solve the more severe contradictions between the resource of frequency efficiency and RF capacity.

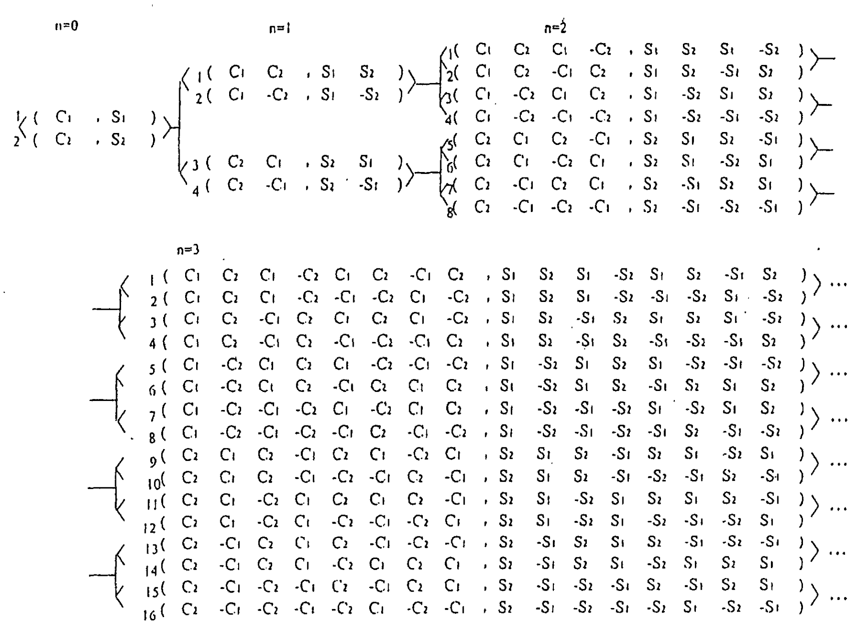


Figure 1

EP 1 257 077 A1

## Description

Technical Field

This invention relates to Spread spectrum and Code Division Multiple Access (CDMA) wireless communication technology; and relates particularly but not exclusively to a spread spectrum multiple access coding method having high spectral efficiency with zero correlation window in a Personal Communication System (PCS).

Background of Invention

The growing popularity of personal communication services coupled with the scarcity of radio bandwidth resources has resulted in the ever-increasing demand for higher spectral efficiency in wireless communications. Spectral efficiency is referred to as the maximum number of subscribers that can be supported in a cell or sector under a given bandwidth allocation and transmission rate requirement. The unit of spectral efficiency is the total transmission rate per unit bandwidth within a given cell or sector. Obviously, the better the spectral efficiency, the higher the system capacity will be.

Traditional wireless Multiple Access Control (MAC) schemes, such as Frequency Division Multiple Access (FDMA), Time Division Multiple Access (TDMA), result in system capacity that is limited by the time-bandwidth multiple. It is impossible to increase the number of supportable subscribers under these MAC schemes. For example, assume that the basic transmission rate of a subscriber is 1/T samples per second and the allocated bandwidth is B Hz. Then, the time-bandwidth multiple is BT, which is the maximum number of supportable subscribers. It is impossible to support more than BT subscribers in FDMA and TDMA systems.

The situation is completely different under Code Division Multiple Access (CDMA) scheme where the system capacity only depends on the Signal-to-Interference Ratio (SIR). Increasing the number of subscribers reduces the SIR, thus lowering the transmission rate. However, a subscriber will not be denied radio resource allocation. In other words, unlike FDMA and TDMA, CDMA does not have a hard upper bound (i.e. BT) on the number of supportable subscribers.

The capacity of a CDMA system depends on the interference level. As such, the ability to accurately control the interference level is critical to the performance and the successful operation of a CDMA system. There are four sources of interference in a CDMA system. The first type of interference (or noise) comes from various sources in the local environment, which cannot be controlled by the wireless communication system. The only way to alleviate this kind of interference is the use of a low noise amplifier. The second type of interference is Inter-Symbol-Interference (ISI). The third type of interference is Multiple Access Interference (MAI) that originates from other subscribers in the same cell. The fourth type of interference is Adjacent Channel or Cell Interference (ACI) that originates from other subscribers in the neighboring channel or cell. It is possible to reduce or eliminate ISI, MAI, and ACI by using higher performance codes.

In a CDMA system, each subscriber has his/her own unique identification code. In addition, the subscribers' spread spectrum codes are orthogonal to each other. The orthogonality requirement is common to all multiple access schemes. If the communication channel is an ideal linear time and frequency non-dispersion system, and the system has a high degree of synchronization, then the subscribers will stay orthogonal to each other. In reality, the communication channel is not ideal, and it is very difficult to achieve tight synchronization for communication channels with time and frequency dispersion. The ability to achieve orthogonality in a non-ideal communication channel with time and frequency dispersion is therefore critical to the successful operation of CDMA systems.

A mobile communication channel is a typical random time varying channel, with random frequency dispersion (due to Doppler shift effect) and random time dispersion (due to multi-path transmission effect). The former results in the degradation in time selectivity of the received signal with unexpected fluctuation of the reception power level. The latter results in the degradation in frequency selectivity, which results in unexpected variations in the reception level within each frequency component. This degradation results in reduced system performance and significantly lowers the system capacity. In particular, because of the time dispersion of the transmission channel (as a result of multi-path transmission), different signal paths do not arrive at the receiver at the same time. This results in the overlapping of neighboring symbols of the same subscriber and causes Inter Symbol Interference (ISI). On the other hand, time dispersion of the channel worsens multiple access interference. When the relative delay of signals of different subscribers are zero, any orthogonal code can achieve orthogonality. However, it is very hard to maintain orthogonality if the relative delay of signals of subscribers is not zero.

In order to reduce ISI, the auto-correlation of each subscriber's access codes must be an ideal impulse function that has all of the energy at the origin, and nowhere else. To reduce MAI, the cross-correlations between multiple access codes of different subscribers must be zero for any relative delay. In terms of orthogonality, ideally each access code must be orthogonal to itself with non-zero time delay. Therefore, ideally, the access codes must be orthogonal to

each other for any relative delay (including zero delay).

For simplicity, the value of the auto-correlation function at the origin is called the main lobe and the values of auto-correlations and cross-correlations at other points are called side lobes. The correlation functions of ideal multiple access codes should have zero side lobes everywhere. Unfortunately, it is proved by Welch's theory that ideal multiple access codes do not exist in the field of finite elements and even in field of complex numbers. The claim that ideal multiple access codes do not exist is called the Welch bound. Here, the side lobes of the auto-correlation function and the side lobes of the cross-correlation function are contradictory to each other; i.e. when the side lobes of one correlation function are small, the side lobes of the other correlation function become big.

Furthermore, NASA had conducted extensive computer searching, to search for all ideal codes without success. Since then, there has been little research work for ideal multiple codes.

In fact, NASA had only searched for those good access codes in the Group codes, and the Welch bound is true in the sub-fields of complex numbers. Therefore beyond the field of complex numbers, ideal codes may exist. For example, B. P. Schweitzer has found an approach to form ideal codes in his Ph.D thesis on " Generalized complementary code sets" in 1971. Later, Leppanen and Pentti (Nokia Telecommunication) extended Dr. Schweitzer's results in the mixed TDMA and CDMA system. Their work has been granted a patent (No: EP 0600713A2; application number: 933095564). They broke the Welch bound in high dimensional space. However, the utilization of frequency is very low and thus there is seen to be no practical value in their work and there has been no application of their invention in nearly 30 years. According to their invention, a system having N multiple access codes, requires at least $N^2$ basic codes. Each basic code has length at least N chips. That means such system needs $N^3$ chips to support N addresses. For example, when N = 128, with 16QAM modulation, the coded spectral efficiency is only $\log_2 16 \times 128/128^3 = 2.441 \times 10^{-4}$ bits/Hz. The greater the number of access codes, the lower the utilization of the spectral efficiency. However, this coding methodology reminds us that ideal multiple access codes can be achieved via complementary code sets. However, the code length grows considerably as the required number of multiple access codes increases.

In addition, with the technique of two-way synchronization, the relative time delay within each access code or between each other in a random time varying channel should not be greater than the maximum time dispersion of the channel plus the maximum timing error. Assuming that value is $\Delta$second, so long as their correlation functions do not have any side lobes in a time interval $(-\Delta,\Delta)$, there is no MAI or ISI between the access codes. The time interval that possesses the above property is called the "zero correlation window". It is obvious that the corresponding CDMA system will be ideal when the "zero correlation window" size is wider than the maximum time dispersion deviation of the channel (i.e. the time delays among multi-paths of the signal) plus the maximum timing error. At the same time, it is also true that the near-far effects are no longer effective. The well-known near-far effects are created by the overlapping of the side lobe of a signal source that is close to the base station receiver with the main lobe of a signal source that is far away from the base station receiver. The side lobe over lies the main lobe, which causes high interference. Accurate, complicated and fast power control has to be used in order to overcome the near-far effects so that the energy of signals must be basically the same at the base station receiver. However, within the "zero correlation window" of the multiple access codes, there are no side lobes in the auto-correlation functions and cross-correlation functions under normal in use conditions. The near-far effects no longer exist in the system. Accordingly complicated and fast power control becomes less important and optional.

## Contents of the Invention

It is an object of an example of the present invention to provide a new coding method to create a series of spread spectrum multiple access codes that have a "Zero Correlation Window" in their auto-correlation and cross-correlation functions. By creating a "zero correlation window", the fatal near-far effects in traditional CDMA radio communications can be avoided; Multiple Access Interference (MAI) and the Inter-Symbol Interference (ISI) can be extinguished; and a high RF capacity radio system can thus be created.

Spread spectrum multiple access codes with "zero correlation window" have the following two properties:

1. The auto-correlation functions are zero except at the origin where all energy reside. Thus the multiple access codes are "ideal" in the sense that the access codes are orthogonal to themselves with any relative non-zero time delay.

2. There exists a "zero correlation window" at the origin and the cross-correlation functions of spread spectrum multiple access codes are zero everywhere inside the window. Thus the access codes are mutually orthogonal whenever the relative time delays are no more than the window size.

Therefore according to the present invention there is provided a method of constructing spread spectrum multiple access codes with a zero correlation window for a wireless communication system, said method including the

following steps:

selecting a pair of basic orthogonal complementary code groups (C1, S1), (C2, S2) each having a code length of N chips, wherein the acylic auto-correlation and cross-correlation functions of code C and code S oppose each other but also complement each other, except at the origin, and wherein the values of auto-correlation and cross-correlation functions after summation are zero except at the origin;

spreading the code length and code number of the basic orthogonal complementary code group in a tree structure, based on the required maximum number of subscriber accesses so that the values of auto-correlation functions of the spreaded code group are zero except at the origin, while the cross-correlation functions form a zero correlation window about the origin, with the window size ≥ 2N-1.

The width of Zero Correlation Window should be greater than or equal to the maximum of relative time delay within each access code or between each other in the system. The maximum of relative time delay will then be determined by the maximum time dispersion of the channel plus the maximum timing error.

When applying the said formed spread spectrum access codes in practice, it should be ensured that code C only operates with code C (including itself and other codes), and code S only with code S (including itself and other codes). Therefore, using two orthogonal propagation channels that are synchronous fading, the above-said code C and code S can be transmitted respectively, and the same information bits can be loaded during modulation, and then their outputs summarized after despreading and demodulating. For the said two orthogonal propagation channels, code C and code S can be modulated respectively on polarized waves orthogonal with each other, or code C and code S can be placed in two time slots that will not overlap with each other after transmission.

The said step of expanding the code length and code number of the said pair of basically orthogonal complementary code group in a tree structure refers to:

If (C1, S1) (C2, S2) is a pair of basic orthogonal complementary code group with code length N, the two pairs of orthogonal complementary code groups each with code length 2N, can be generated in the following way:

```
                        ┌── (C1 C2,S1 S2)
                        │   (C1 -C2, S1 -S2)
(C1, S1)              ──┤
(C2, S2)                │
                        └── (C2 C1, S2 S1)
                            (C2 -C1, S2 -S1)
```

Wherein the values of auto-correlation functions of the orthogonal complementary code group formed on upper and lower trees after spreading will be zero everywhere except at the origin; while the cross-correlation function will form a Zero Correlation Window around the origin with the size of the window ≥ 2N-1.

The above spread can be kept replicated with the tree structure so as to generate $2^{n+1}$orthogonal complementary code groups with the code length $N2^n$ and the width of the zero correlation window ≥ 2N-1, in which n = 0,1,2, ... is the number of spread times.

The equivalent transformation can be made to the generated orthogonal complementary code group.

The said pair of basically orthogonal complementary code group (C1, S1), (C2, S2), refers to that the auto-correlation function and cross-correlation function which is respectively the summation of acylic auto-correlation with cross-correlation functions between codes C, and the summation of acylic auto-correlation with cross-correlation functions between codes S.

The code length and the width of the zero correlation window of the said pair of basically orthogonal complementary code group can be spread in the following way:

(C1 C2, S1 S2)
(C1 -C2, S1 -S2)
(C1, S1)
(C2, S2)
(C2 C1, S2 S1)
(C2 -C1, S2 -S1)

Wherein if each code length of the said pair of a basically orthogonal complementary code group (C1, S1), (C2, S2) is N, and the width of a zero correlation window is L, then each code length of the spread pair of basically orthogonal complementary code group will be 2N, while the width of the zero correlation window will be 2L+1.

When N = 2, the pair of the basically orthogonal complementary code group will be:

( ++ , +- )

( -+ , -- )

Wherein "+" means +1 and "-" -1, while the width of the zero correlation window will be 3.

The above spread can be replicated in accordance with the tree structure so as to generate $2^n$ pairs of orthogonal complementary code groups with the code length $N2^n$ and the width of the zero correlation window as $(2^nL+2^{n-1}+2^{n-2}+2^{n-3}+...+2^1+1)$, in which n = 0,1,2, ... is the number of spread times.

The equivalent transformation can be made to the generated basically orthogonal complementary code group.

Brief Description of the Drawings

Fig.1 is the first schematic diagram of a generation tree of an orthogonal complementary code group with zero correlation window in an example of the present invention.

Fig.2 is the second schematic diagram of a generation tree of an orthogonal complementary code group with zero correlation window in an example of the present invention.

Fig.3 is the schematic diagram of the generation tree of a basically orthogonal complementary code group in an example of the present invention.

Preferred Embodiments of the Invention

The present invention will be described with reference to examples of preferred embodiments of the invention. The coding steps will be described hereinafter beginning with a basic code group with a code of length 2 and two access numbers.

Given two sets of codes of length 2, C Set: C1=(+, +), C2=(-, +) and S Set: S1=(+, -), S2=(-, -); wherein "+" means +1 and "-" means -1.

It is true that without any shift between each other (relative time delay), each pair of {C1, C2}, {S1, S2}, {C1, S1}, {C2, S2} are mutually orthogonal, i.e. their cross-correlation functions have zero value at the origin. However, with shift between each other (relative time delay), the mutual orthogonal property may not exist, i.e. the cross-correlation functions have non-zero values except at the origin. See the following correlation tables for details. Table 1 shows the auto- and cross-correlation functions values of codes C1 and C2 with different shifts and Table 2 shows the auto- and cross-correlation values of codes S1 and S2 with different shifts.

**Table 1 Correlation of the C Codes: C1=(+ +); C2 =(- +)**

| Time shift $\tau$ / Value | -1 | 0 | 1 |
|---|---|---|---|
| $R_{c_1}(\tau)$ | 1 | 2 | 1 |
| $R_{c_2}(\tau)$ | -1 | 2 | -1 |
| $R_{c_1c_2}(\tau)$ | 1 | 0 | -1 |

**Table 2 Correlation of the S codes: S1=(+ -); S2=(- -)**

| Time shift $\tau$ / Correlation value | -1 | 0 | 1 |
|---|---|---|---|
| $R_{s_1}(\tau)$ | -1 | 2 | -1 |
| $R_{s_2}(\tau)$ | 1 | 2 | 1 |
| $R_{s_1s_2}(\tau)$ | -1 | 0 | 1 |

It can be seen that both codes are not ideal. However, when these two tables are added together, the codes become ideal (See Table 3).
Now Define auto-correlation functions

$$R_1(\tau) \stackrel{\Delta}{=} R_{S_1}(\tau)+R_{c_2}(\tau), \quad R_2(\tau) \stackrel{\Delta}{=} R_{c_2}(\tau)+R_{s_2}(\tau),$$

and cross-correlation functions

$$R_{12}(\tau) \stackrel{\Delta}{=} R_{c_1c_2}(\tau)+R_{s_1s_2}(\tau).$$

With the above new definition of correlation functions, i.e. the new correlation functions (including auto- and cross-correlation functions) are the summation of the correlation functions of C codes and the correlation functions of S codes, and the values of the auto- and cross-correlation functions of the codes one and codes two become ideal.

Such codes C and S can be called "complementary orthogonal" if C and S are ideal under the new definition of correlation functions $R_1(\tau)$, $R_2(\tau)$, and $R_{12}(\tau)$, i.e. their correlation functions are opposed and complementary to each other, except at the origin. The above C and S code sets can be, for convenience, expressed as (C1, S1) = (++, +-) and (C2, S2) = (-+, --).

Table 3 shows the correlation functions of the complementary orthogonal codes.

**Table 3 Correlation of C and S codes (C1, S1) = (++;+−); (C2, S2) = (−+;−−);**

| Value \ Time shift $\tau$ | -1 | 0 | 1 |
|---|---|---|---|
| $R_1(\tau) = R_{c_1}(\tau) + R_{s_1}(\tau)$ | 0 | 4 | 0 |
| $R_2(\tau) = R_{c_2}(\tau) + R_{s_2}(\tau)$ | 0 | 4 | 0 |
| $R_{12}(\tau) = R_{c_1c_2}(\tau) + R_{s_1s_2}(\tau)$ | 0 | 0 | 0 |

There is only one basic form for an orthogonal complementary code group where there are two access codes, each of code length 2. It is proven that the C set of codes C1=(++), C2=(-+) and the S set of codes: S1=(+-), S2=(--) are the basic form of complementary orthogonal codes of length 2. Other forms can be derived from reordering of C1 and C2, S1 and S2, swapping C and S, rotation, order reverse, interleaving polarity, and alternative negation etc without any substantial differences. It should be noted that only the operation of code C with code C and code S with code S should take place when making the operation of correlation or matching filtering. Code C and code S will not encounter on operation.

Longer codes for example, an orthogonal complementary code group with the two access codes each of code length 4 - can be derived from the above basically orthogonal complementary code group.

An exemplary generation method is:
Let
$(C_1', S_1')$ = (C1 C2, S1 S2); $(C_2', S_2')$ = (C1 - C2, S1 -S2); Wherein $C_1'$, means the concatenation of original code C1 and C2; $C_2'$, means the concatenation of C1 and the negation of C2. The same operations are applied to $S_1'$, and $S_2'$,.

They can be expressed as:

$$(C_1', S_1') = (++-+, +---);$$

$$(C_2', S_2') = (+++-, +-++);$$

Table 4 shows the orthogonal complementary correlation functions of the new code group. It can be seen that both the complementary auto-correlation function and the cross-correlation function are ideal.

An other exemplary generation method involves reversing the order of the codes, that is:

$$(C_1'', S_1'') = (C2\ C1,\ S2\ S1) = (-+++, --+-)$$

$$(C_2'', S_2'') = (C2 - C1,\ S2 - S1) = (-+--, ---+)$$

The complementary auto-correlation function and cross-correlation function are also ideal for these codes. The orthogonal complementary correlation functions of the new code group are the same as those of the above code group. (See Table 4)

**Table 4: The Orthogonal Complementary Correlation Functions (each code length is $2^2 = 4$):**

$(C^1, S^1)$ = (++-+, +---) ; $(C^2, S^2)$ = (+++-, +-++)

or $(C^1, S^1)$ = (-+++,--+-); $(C^2, S^2)$ = (-+--, ---+)

| Correlation \ Time shift τ | -3 | -2 | -1 | 0 | 1 | 2 | 3 |
|---|---|---|---|---|---|---|---|
| $R_1(\tau) = R_{c_1}(\tau) + R_{s_1}(\tau)$ | 0 | 0 | 0 | 8 | 0 | 0 | 0 |
| $R_2(\tau) = R_{c_2}(\tau) + R_{s_2}(\tau)$ | 0 | 0 | 0 | 8 | 0 | 0 | 0 |
| $R_{12}(\tau) = R_{c_1c_2}(\tau) + R_{s_1s_2}(\tau)$ | 0 | 0 | 0 | 0 | 0 | 0 | 0 |

In this way, it is possible to obtain orthogonal complementary code groups with two access codes and code length of $2^n$ (n = 1,2...). It can be proved that their auto-correlation and cross-correlation functions are all ideal. Although the auto-correlation and cross-correlation functions of the access codes formed by this coding method are ideal, there are only two access codes. It is apparent that two access codes are insufficient for a CDMA communications system. In practice, it is required that the number of the orthogonal access codes be as many as possible for a given code length. While their auto-correlation and cross-correlation functions need not be ideal everywhere, it is desirable that there is a zero correlation window around the origin that can meet the needs.

By renumbering and arranging the above four complementary code groups with each code length 4, the result can be as follows:

(C1, S1)=(++-+, +---) ; (C2, S2)=(+++-, +-++)

(C3, S3)=(-+++, --+-) ; (C4, S4)=(-+--, ---+)

Table 5 shows the correlation functions of the said complementary code group.

**Table 5: The Correlation Matrix of Codes (each code length is $2^2 = 4$):**

(C1,S1) = (++-+, +---); (C2,S2) = (+++-, +-++);
(C3,S3) = (-+++, --+-); (C4,S4) = (-+--, ---+)

| Time Shift τ / Correlation | -3 | -2 | -1 | 0 | 1 | 2 | 3 |
|---|---|---|---|---|---|---|---|
| $R_1(\tau)=R_{c_1}(\tau)+R_{s_1}(\tau)$ | 0 | 0 | 0 | 8 | 0 | 0 | 0 |
| $R_2(\tau)=R_{c_2}(\tau)+R_{s_2}(\tau)$ | 0 | 0 | 0 | 8 | 0 | 0 | 0 |
| $R_3(\tau)=R_{c_3}(\tau)+R_{s_3}(\tau)$ | 0 | 0 | 0 | 8 | 0 | 0 | 0 |
| $R_4(\tau)=R_{c_4}(\tau)+R_{s_4}(\tau)$ | 0 | 0 | 0 | 8 | 0 | 0 | 0 |
| $R_{12}(\tau)=R_{c_1c_2}(\tau)+R_{s_1s_2}(\tau)$ | 0 | 0 | 0 | 0 | 0 | 0 | 0 |
| $R_{34}(\tau)=R_{c_3c_4}(\tau)+R_{s_3s_4}(\tau)$ | 0 | 0 | 0 | 0 | 0 | 0 | 0 |
| $R_{13}(\tau)=R_{c_1c_3}(\tau)+R_{s_1s_3}(\tau)$ | 0 | 4 | 0 | 0 | 0 | 4 | 0 |
| $R_{14}(\tau)=R_{c_1c_4}(\tau)+R_{s_1s_4}(\tau)$ | 0 | -4 | 0 | 0 | 0 | 4 | 0 |
| $R_{23}(\tau)=R_{c_2c_3}(\tau)+R_{s_2s_3}(\tau)$ | 0 | 4 | 0 | 0 | 0 | -4 | 0 |
| $R_{24}(\tau)=R_{c_2c_4}(\tau)+R_{s_2s_4}(\tau)$ | 0 | -4 | 0 | 0 | 0 | -4 | 0 |

Wherein (C1,S1) and (C2,S2), (C3, S3) and(C4, S4) are the pairs of orthogonal complementary code group with the ideal property respectively, but the cross-correlation functions between groups are not ideal. For example, $R_{13}(\tau)$and $R_{14}(\tau)$, $R_{23}(\tau)$ and $R_{24}(\tau)$ are not zero everywhere, but there is a zero correlation window which is 3 chips wide. Thus, a zero correlation window can be obtained for an orthogonal complementary code group with 4 access codes, each of code length 4. The reason that the size of the zero correlation window is 3 is because the above four orthogonal complementary code groups are all composed of basic orthogonal complementary code groups with code length 2, i. e. (C1, S1) = (++, +-) and (C2, S2) = (-+, --). The basic code group has only three status of time shift, i.e. -1, 0, and 1, because of each code length 2. 2. Accordingly, in only ideal cases can a zero correlation window with the size of 3 be obtained.

To generate a wide window of zero correlation, the lengths of the C1 and S1 codes need to be increased. Take for example, a situation where the code length of the basic complementary code groups is 4. In this case there are two pairs of completely orthogonal basic complementary code group of code length 4.

They are: (++-+, +---), (+++-, +-++), and (-+++, --+-), (-+--, ---+).

Supposing that the first pair of code group is the original orthogonal complementary code group four pairs of orthogonal complementary code groups each having code length 8 can be generated following the aforementioned methods.

They are: (C1, S1) = (++-++++-, +---+-++); (C2, S2) = (++-+---+, +----+--); and (C3, S3) = (+++-++-+, +-+++---); (C4, S4) =(+++---+-, +-++-+++).

Accordingly it can be expected that the size of their zero correlation window is 7 chips wide.

The correlation functions of these orthogonal complementary codes group are presented in the following matrix of Table 6:

**Table 6 Correlation Matrix of codes (each code length $2^3$ = 8):**

(C1, S1) = (++-++++-, +---+-++); (C2, S2) = (++-+---+, +----+--);

(C3, S3) = (+++-++-+, +-+++---); (C4, S4) =(+++---+-, +-++-+++)

| Correlation \ Time shift $\tau$ | -7 | -6 | -5 | -4 | -3 | -2 | -1 | 0 | 1 | 2 | 3 | 4 | 5 | 6 | 7 |
|---|---|---|---|---|---|---|---|---|---|---|---|---|---|---|---|
| $R_1(\tau) = R_{c_1}(\tau) + R_{s_1}(\tau)$ | 0 | 0 | 0 | 0 | 0 | 0 | 0 | 16 | 0 | 0 | 0 | 0 | 0 | 0 | 0 |
| $R_2(\tau) = R_{c_2}(\tau) + R_{s_2}(\tau)$ | 0 | 0 | 0 | 0 | 0 | 0 | 0 | 16 | 0 | 0 | 0 | 0 | 0 | 0 | 0 |
| $R_3(\tau) = R_{c_3}(\tau) + R_{s_3}(\tau)$ | 0 | 0 | 0 | 0 | 0 | 0 | 0 | 16 | 0 | 0 | 0 | 0 | 0 | 0 | 0 |
| $R_4(\tau) = R_{c_4}(\tau) + R_{s_4}(\tau)$ | 0 | 0 | 0 | 0 | 0 | 0 | 0 | 16 | 0 | 0 | 0 | 0 | 0 | 0 | 0 |
| $R_{12}(\tau) = R_{c_1c_2}(\tau) + R_{s_1s_2}(\tau)$ | 0 | 0 | 0 | 0 | 0 | 0 | 0 | 0 | 0 | 0 | 0 | 0 | 0 | 0 | 0 |
| $R_{34}(\tau) = R_{c_3c_4}(\tau) + R_{s_3s_4}(\tau)$ | 0 | 0 | 0 | 0 | 0 | 0 | 0 | 0 | 0 | 0 | 0 | 0 | 0 | 0 | 0 |
| $R_{13}(\tau) = R_{c_1c_3}(\tau) + R_{s_1s_3}(\tau)$ | 0 | 0 | 0 | 8 | 0 | 0 | 0 | 0 | 0 | 0 | 0 | 8 | 0 | 0 | 0 |
| $R_{14}(\tau) = R_{c_1c_4}(\tau) + R_{s_1s_4}(\tau)$ | 0 | 0 | 0 | -8 | 0 | 0 | 0 | 0 | 0 | 0 | 0 | 8 | 0 | 0 | 0 |
| $R_{23}(\tau) = R_{c_2c_3}(\tau) + R_{s_2s_3}(\tau)$ | 0 | 0 | 0 | 8 | 0 | 0 | 0 | 0 | 0 | 0 | 0 | -8 | 0 | 0 | 0 |
| $R_{24}(\tau) = R_{c_2c_4}(\tau) + R_{s_2s_4}(\tau)$ | 0 | 0 | 0 | -8 | 0 | 0 | 0 | 0 | 0 | 0 | 0 | -8 | 0 | 0 | 0 |

It is observed that two pairs of four new orthogonal complementary codes groups can be obtained from one pair of orthogonal complementary codes groups, each have their code length doubled. Four pairs of eight orthogonal complementary codes groups can be further derived from these two pairs of four orthogonal complementary codes groups. In this way, eight pairs of sixteen orthogonal complementary codes groups can be derived, wherein the auto-correlation functions of each codes group and the cross-correlation functions between inside codes groups are all ideal, while the cross-correlation functions of the codes groups between pairs have a zero correlation window. The size will then depend on the original orthogonal complementary code group. The process can be illustrated by drawing a generation tree. Fig. 1 shows one such generation tree, Fig. 2 is another tree. There are many other possible generation trees. The relationships between them are equivalent transformations. Such transformations do not change the size of zero correlation windows. However, the value of side lobes and their distribution outside the " zero correlation window " can sometimes change.

Fig. 3, shows a basic pair of complementary code group which will be used in the actual coding process of multiple access codes. In Fig.3, all pairs of the code group in "<>" are a basic pair of orthogonal complementary code groups without any side lobes for their complementary auto-correlation functions and cross-correlation functions. That

is to say, they are totally ideal. It should be noted that Fig. 3 shows only a pair of basically orthogonal complementary code groups. There are many ways of equivalent transformations, such as swapping the order of up and down or left and right, reversing the order of forwards and backwards, making alternately negation, rotating in complex plane, etc, in which equivalent pairs of basically orthogonal complementary code groups can be obtained with completely ideal auto-correlation and cross-correlation functions. These are all to be considered to be within the scope of the present invention.

The construction process for the spread spectrum access codes will be described in detail below.

Firstly, the required size of zero correlation windows is determined according to the propagation conditions of the system, and the basic spread spectrum code bit rate (referred to as Chip Rate in terms of engineering, calculated in millions of chips per second (MCPS) used by the system, and the maximum timing error in the system.

Secondly, a pair of basically orthogonal complementary code group is selected with a zero correlation window having a size ≥ the required window size, as the original orthogonal complementary code groups, and refer to it as (C1, S1), (C2, S2).

The required maximum number of subscriber accesses is then determined according to the actual number of subscribers, and the selected original pair of basically orthogonal complementary code groups is then spread as the origin of Fig. 2 or Fig. 3 in the tree view.

The number of spreading stages in Fig.2 or Fig. 3 is then dependent on the required maximum number of subscribers. For example, when the number of the required maximum number of subscribers is 120, because of $2^7 = 128 \geq 120$, the required number of spreading stages is 7, while the $2^7 = 128$ group of codes in the 7th stage of Fig.2 or Fig. 3 can be the selected multiple access codes. At this time, the actual available maximum number of subscriber accesses is 128, which is larger than the 120 required number of subscribers, and meets the needs completely.

In a practical implementation, sometimes more mutations or variations of the access codes are needed. There needs to be equivalent transformations for the generated multiple access codes. The types of such transformations are so many that enumeration one by one is not necessarily. The most common of equivalent transformations are as follows:

Swapping the position of code C and code S.

Swapping the positions of C1 & C2 and S1& S2 simultaneously.

Making negation to the order of codes.

Making negation to each code bit.

Interlacing the polarity of each code bit: for example, for (++-+, +---), (+++-, +-++), interlace the polarity of each code bit, that is to say, the polarity of the odd code bits, such as the first, the third bit, etc, will remain unchanged, while the polarity of the even code bits, such as the second, the fourth bit etc, will change. So (+---, ++-+), (+-++, +++-) will result from this transformation. In like manner, the polarity of the odd code bits can be changed, while the polarity of the even code bits is unchanged.

Rotating each code bit in complex plane: for example, by rotating in turn each code bit of (++-+, +---), (+++-, +-++) at $\alpha$ angular degree, the following result will be obtained:

$$(e^{j\varphi_{c_1}} e^{j(\varphi_{c_1}+\alpha)} - e^{j(\varphi_{c_1}+2\alpha)} e^{j(\varphi_{c_1}+3\alpha)}, e^{j\varphi_{s_1}} - e^{j(\varphi_{s_1}+\alpha)} - e^{j(\varphi_{s_1}+2\alpha)} - e^{j(\varphi_{s_1}+3\alpha)},$$

$$(e^{j\varphi_{c_2}} e^{j(\varphi_{c_2}+\alpha)} e^{j(\varphi_{c_2}+2\alpha)} - e^{j(\varphi_{c_2}+3\alpha)}, e^{j\varphi_{s_2}} - e^{j(\varphi_{s_2}+\alpha)} e^{j(\varphi_{s_2}+2\alpha)} e^{j(\varphi_{s_2}+3\alpha)}$$

Here $\varphi_{C1}$,$\varphi_{C2}$,$\varphi_{S1}$ and $\varphi_{S1}$can be any initial angular degree. It can be proven that the properties of auto-correlation and cross-correlation functions of each resultant access code are still unchanged after rotating transformation. However, the side lobes outside the "zero correlation window" relate to the rotated angular degree (being narrower or changing polarity). The aforementioned basically orthogonal complementary code group can be deemed as the code group with zero rotating angular degree.

Properly selecting the rotated angular degree can make the rotated code groups orthogonal between them, i.e. multi groups of orthogonal codes can be generated from one group of orthogonal codes. This will be very convenient for the practical implementation, especially when the code length is a little bit longer, the result may be so beneficial that it will meet various needs of engineering, such as networking configuration, handoff/handovers, as well as the

enhancement of RF capacity, etc.

Making transformation in the generation tree: for example, Fig. 3 is a kind of equivalent transform of Fig. 2, i.e. by moving all C1 codes and S1 codes to the left, C2 codes and S2 codes to the right in the corresponding C code and S code position; and interlacing, in certain rules, the code bits of C code and S code in the resulted multiple access codes groups, or changing the polarity arrangement, etc. In Mathematics, such transformation is called equivalent transformation. There are so many equivalent transforms that it is impossible to enumerate these one by one, however, a skilled addressee will understand the transformations that are possible.

When applying the said formed spread spectrum access codes in practice, it should be ensured that code C only operates, with code C (including itself and other codes), and code S only with code S (including itself and other codes). Code C should never be allowed to encounter code S. Therefore, special measures should be taken to keep them separate. For example, code C and code S can be modulated respectively on polarized waves (horizontal and vertical polarized waves, laevorotation and dextrorotation polarized waves) orthogonal with each other. Another example, code C and code S can be put in two time slots that will not overlap with each other after transmission. Because the propagation channels will change randomly with time, the channel properties within the two polarized waves and two time slots should be kept synchronous in the propagation process to ensure they are complementary. Further, their fading should be synchronous. This means that when separating by polarization, the frequency channel without depolarization that can ensure the orthogonal polarized waves fading synchronously and corresponding measures should be used. When separating by time division, it should be ensured that the gap between two time slots is far less than the correlation time of the channel. When using other separation methods, synchronous fading should also be ensured.

Because code C and code S should be separated when propagated, so they are complementary, it will be apparent to persons skilled in the art that the data bits modulated on them should also be identical, while the outputs after de-spreading and demodulation of code C and code S should be added together.

The coding method presents a linear relation, because the total required number of code bits is only in direct proportion to the required number of accesses (about twofold). It moves forward compared with the results of Dr. B.P. Schweitzer , Leppanen and Pentti. In their methods, the total required number of code bits is a cube relation with the required number of accesses. Therefore, it can be said that using the CDMA system according to the above techniques will have much higher spectrum efficiency.

An exemplary embodiment of the present invention has been fully verified by computer simulation using the same conditions, such as propagation fading, widening of multipath transmission, system bandwidth, subscriber transmission rate, and frame structure, used in the first commercial CDMA standard in the world, i.e. IS-95, (Interim Standard 95 administered by the U.S. Telecommunications Industry Association). The computer simulation shows that the spectral efficiency of the system, when using the multiple access code system of the present examples, will be at least sixfold that of IS-95.

It is to be understood that, if any prior art publication is referred to herein, such reference does not constitute an admission that the publication forms a part of the common general knowledge in the art, in Australia or any other country.

## Claims

1. A method of constructing spread spectrum multiple access codes with a zero correlation window for a wireless communication system, said method including the following steps:

   selecting a pair of basic orthogonal complementary code groups (C1, S1), (C2, S2) each having a code length of N chips, wherein the acylic auto-correlation and cross-correlation functions of code C and code S oppose each other but also complement each other, except at the origin, and wherein the values of auto-correlation and cross-correlation functions after summation are zero except at the origin;

   spreading the code length and code number of the basic orthogonal complementary code group in a tree structure based on the required maximum number of subscriber accesses so that, the values of auto-correlation functions of the spreaded code group are zero except at the origin, while the cross-correlation functions form a zero correlation window about the origin, with the window size ≥ 2N-1.

2. The method of claim 1, wherein the size of the said zero correlation window is ≥ a maximum relative time delay inside each access code or between them, and wherein the maximum relative time delay is dependent on the summation of the maximum time dispersion of a channel and a timing error of the system.

3. The method of claim 1, wherein code C and code S are intended to be transmitted using two orthogonal and fading

synchronously transmission channels, which carry the same data bits when modulated, and the outputs are intended to be added together after de-spreading and demodulation.

**4.** The method of claim 1, wherein spreading the code length and code number of the basically orthogonal complementary code group in a tree structure refers to:
If (C1, S1), (C2, S2) is a pair of basic orthogonal complementary code group with code length N, the two pairs of orthogonal complementary code group with each code length 2N are generated by:

```
                    (C1 C2, S1 S2)
                 ┌─
                 │  (C1 -C2, S1 -S2)
(C1, S1)        │
               ─┤
(C2, S2)        │
                 │
                 └─ (C2 C1, S2 S1)
                    (C2 -C1, S2 -S1)
```

wherein the values of auto-correlation functions of the orthogonal complementary code group formed on upper and lower trees after spreading are zero everywhere except at the origin, while the cross-correlation functions form a Zero Correlation Window around the origin with the size of the window ≥ 2N-1.

**5.** The method of claim 4, wherein the above spread is replicated with the tree structure so as to generate $2^{n+1}$orthogonal complementary code groups with the code length $N2^n$ and the width of the zero correlation window ≥ 2N-1, in which n = 0,1,2, ... is the number of spread times.

**6.** The method of claim 4 or claim 5, wherein an equivalent transformation is applied to a resultant orthogonal complementary code group to obtain an alternate orthogonal complementary code group.

**7.** The method of claim 6, wherein said equivalent transformation involves swapping a forward and backward position of the resultant code group.

**8.** The method of claim 6, wherein said equivalent transformation involves swapping an up and down position of the resultant code group.

**9.** The method of claim 6, wherein the said equivalent transformation involves negation of code order of each code.

**10.** The method of claim 6, wherein the said equivalent transformation involves interlacement of polarity of each code bit.

**11.** The method of claim 6, wherein the said equivalent transformation involves rotation of each code bit in a complex plane in a sequence or without sequence.

**12.** The method of claim 1, wherein said pair of basic orthogonal complementary code groups (C1, S1), (C2, S2) refers to the auto-correlation function and cross-correlation function and is respectively the summation of acylic auto-correlation with cross-correlation functions between codes C, and the summation of acylic auto-correlation with cross-correlation functions between codes S.

**13.** The method of claim 12, wherein the code length and the width of the zero correlation window of the said pair of basically orthogonal complementary code groups is spread in the following way:

```
                  ┌─ (C1 C2, S1 S2)
                  │  (C1 -C2, S1 -S2)
(C1, S1)  ────────┤
(C2, S2)          │
                  └─ (C2 C1, S2 S1)
                     (C2 -C1, S2 -S1)
```

wherein if each code length of the said pair of basically orthogonal complementary code group (C1, S1), (C2, S2) is N, and the width of the zero correlation window is L, then each code length of the spread pair of basic orthogonal complementary code group will be 2N, while the width of the zero correlation window will be 2L+1.

**14.** The method of claim 13, wherein when N = 2, the pair of basic orthogonal complementary code group will be:
( ++ , +- )
( -+ , -- ) Wherein "+" means +1 and "-" -1, while the width of the zero correlation window will be 3.

**15.** The method of claim 13 or claim 14, wherein the spreading the code length and code number replicated in accordance with the tree structure so as to generate $2^n$ pairs of orthogonal complementary code groups with the code length $N2^n$ and the width of the zero correlation window as ($2^nL+2^{n-1}+2^{n-2}+2^{n-3}+...+2^1+1$), in which n = 0, 1, 2, . ... is the number of spreading steps.

**16.** The method of claim 15, wherein an equivalent transformation is applied to the resultant basically orthogonal complementary code group.

**17.** The method of claim 16, wherein the said equivalent transformation involves swapping the forward and backward position of the resultant code group.

**18.** The method of claim 16, wherein the said equivalent transformation involves swapping the up and down position of the resultant code group.

**19.** The method of claim 16, wherein the said equivalent transformation involves the negation of code order of each code.

**20.** The method of claim 16, wherein the said equivalent transformation involves the interlacement of polarity of each code bit.

**21.** The method of claim 16, wherein the said equivalent transformation involves the rotation of each code bit in a complex plane in a sequence or without sequence.

**22.** The method of claim 3, wherein said orthogonal and fading synchronously transmission channel is provided by orthogonal polarized wave.

**23.** The method of claim 3, wherein said orthogonal and fading synchronously transmission channel is provided by time slots which do not overlap each other.

**24.** The method of claim 1, wherein one code or multiple access codes are allocated based on the needs of the different data rate and services of each subscriber to achieve different quality of priority level services.

**25.** The method of claim 1, wherein the required spreading spectrum access codes are adaptively generated based on the zero correlation window required for at least one of different propagation modes, different number of subscribers, and the needs of different data rates as well as services, so that there will be no inter-signal interference (ISI) and multi access interference (MAI) in a corresponding spreading spectrum CDMA system.

**26.** The method of claim 1, wherein the resultant multiple access codes provided by the equivalent transformation are used to meet the needs of at least one of network configuration, handoff and enhancement of system capacity, in cellular mobile or fixed point to multi points wireless telecommunications system.

**27.** The method of claim 1, wherein the coding is one of complex codes.

**28.** The method of claim 1, applied to a spread spectrum communication system.

**29.** The method of claim 1, applied to any one of a TD/CDMA, FD/CDMA, WD/CDMA, SD/CDMA or CDMA communications system.

**30.** A set of spread spectrum access codes constructed in accordance with the method of claim 1.

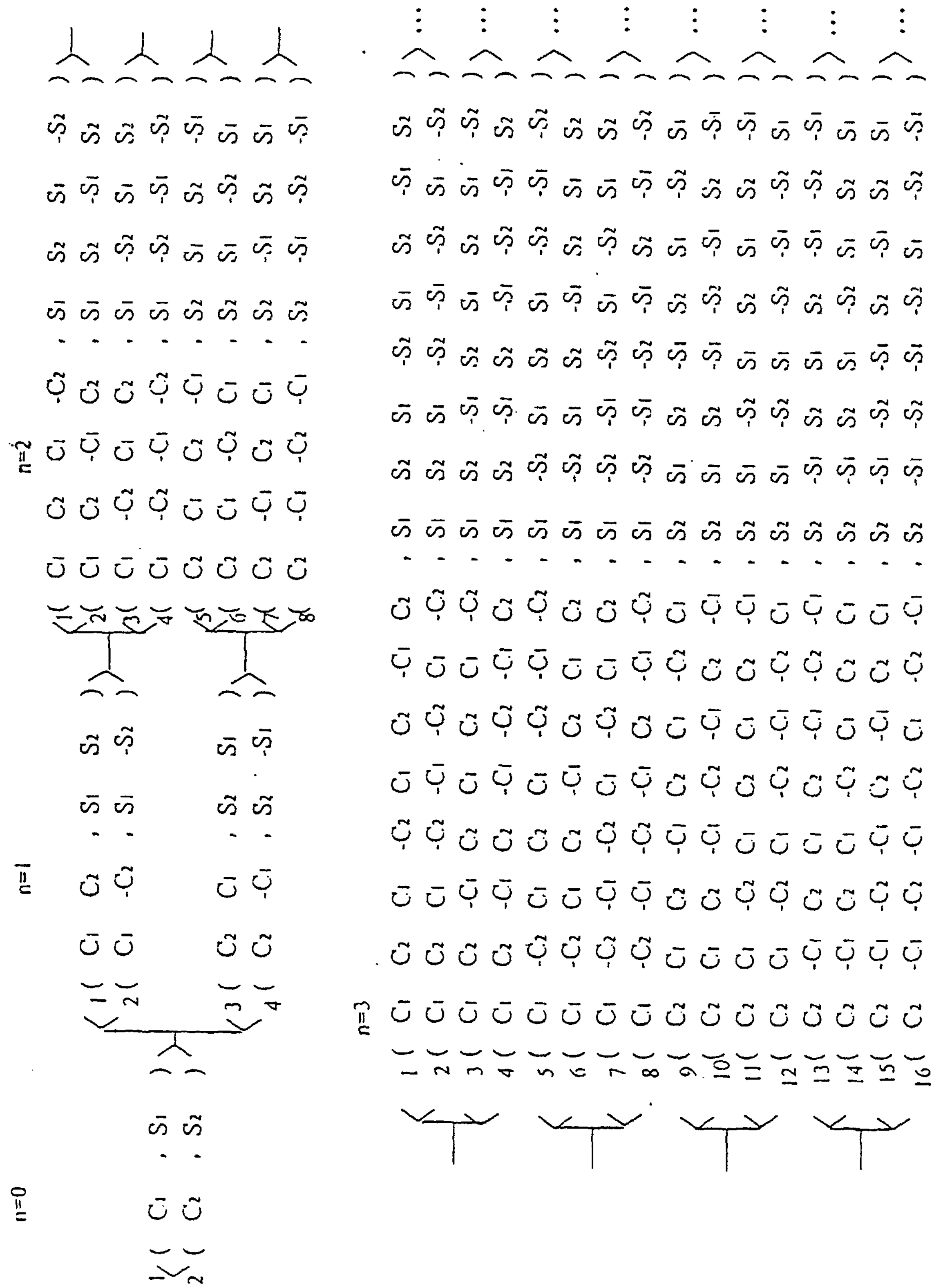


Figure 1

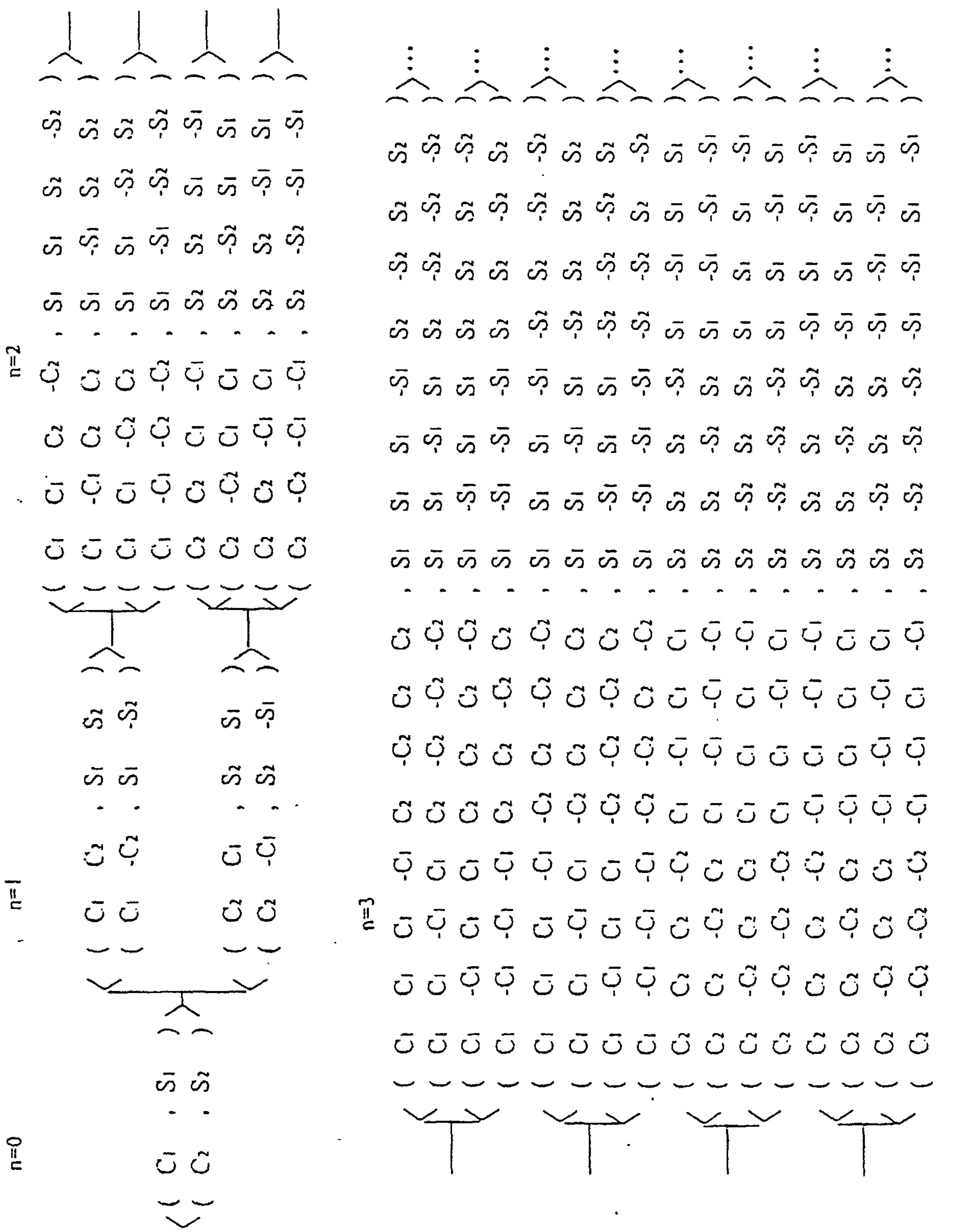


Figure 2

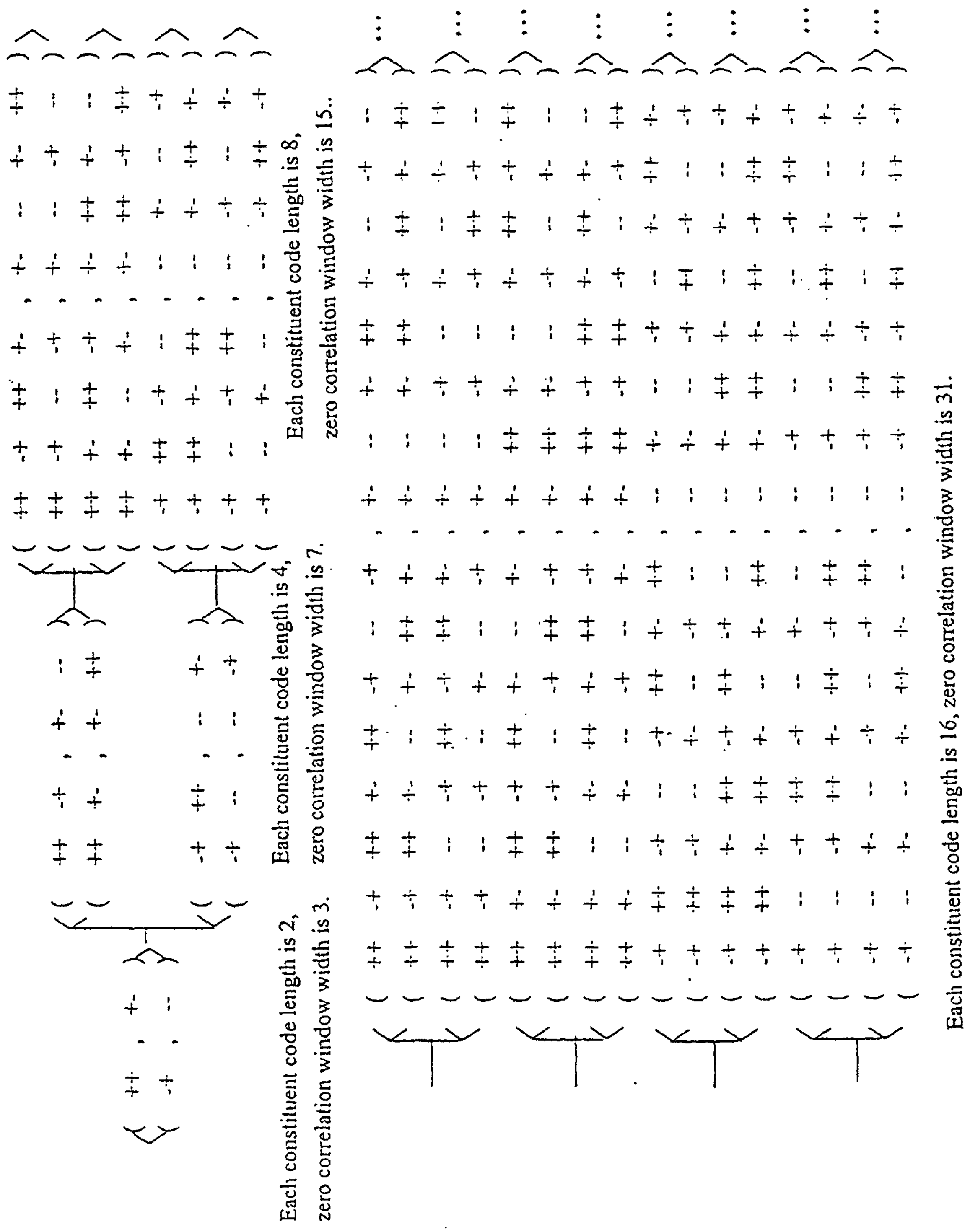
Each constituent code length is 2, zero correlation window width is 3.
Each constituent code length is 4, zero correlation window width is 7.
Each constituent code length is 8, zero correlation window width is 15..
Each constituent code length is 16, zero correlation window width is 31.

Figure3

## INTERNATIONAL SEARCH REPORT

International application No.
PCT/CN00/00028

A. CLASSIFICATION OF SUBJECT MATTER

$IPC^7$ H04J 13/02

According to International Patent Classification (IPC) or to both national classification and IPC

B. FIELDS SEARCHED

Minimum documentation searched (classification system followed by classification symbols)

$IPC^7$ H04J 13/02

Documentation searched other than minimum documentation to the extent that such documents are included in the fields searched

Electronic data base consulted during the international search (name of data base and, where practicable, search terms used)

EPODOC WPI PAJ CPOPAT

C. DOCUMENTS CONSIDERED TO BE RELEVANT

| Category* | Citation of document, with indication, where appropriate, of the relevant passages | Relevant to claim No. |
|---|---|---|
| A | WO 9842079A2(I.C.COM LTD.) 24.Sep.1998(24.09.98) See the whole document | 1-30 |
| A | US 5446727A(Bruckert et al.) 29.Aug.1995(29.08.95) See the whole document | 1-30 |
| A | US 5235615A(Omura) 10.Aug.1993 (10.08.93) See the whole document | 1-30 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim (S) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 19.Oct.2000(19.10.00) | **16 November 2000 (16.11.00)** |

| Name and mailing address of the ISA/CN | Authorized officer |
|---|---|
| 6 Xitucheng Rd., Jimen Bridge, Haidian District, 100088 Beijing, China<br>Facsimile No. 86-10-62019451 | Telephone No. 86-10-62093193 |

Form PCT/ISA /210 (second sheet) (July 1998)

## INTERNATIONAL SEARCH REPORT

Information patent family members

Search request No.
PCT/CN00/00028

| Patent document cited in search report | Publication Date | Patent family Member(s) | Publication Date |
|---|---|---|---|
| WO 9842079A2 | 24.Sep.1998 | AU 6759398A | 12.Oct.1998 |
| US 5446727A | 29.Aug.1995 | WO 9515626A1 | 08.Jun.1995 |
| | | FI 953407A | 12.Jul.1995 |
| | | SE 9502704A | 29.Sep.1995 |
| | | BR 9405751A | 05.Dec.1995 |
| | | GB 2290200AB | 13.Dec.1995 |
| | | EP 0695484A1 | 07.Feb.1996 |
| | | CN 1116889A | 14.Feb.1996 |
| | | JP 10508435T | 18.Aug.1998 |
| US 5235615A | 10.Aug.1993 | US 5164958A | 17.Nov.1992 |

Form PCT/ISA /210 (extra sheet6) (July 1998)